# EUROPÄISCHE PATENTSCHRIFT

(11) **EP 1 441 099 B1**
(45) Veröffentlichungstag und Bekanntmachung des Hinweises auf die Patenterteilung: **20.12.2006**
(21) Anmeldenummer: 04000122.4
(22) Anmeldetag: 07.01.2004
(51) Int. Cl.: E05F 5/02

(54) **Brems- und Dämpfungsvorrichtung, insbesondere für bewegliche Möbelteile**
Braking and damping device, in particular for moving furniture parts
Dispositif de freinage et amortissage, en particulier pour pièces de meuble sujettes à des mouvements

(30) Priorität: 16.01.2003 DE 10301418
(43) Veröffentlichungstag der Anmeldung: 28.07.2004
(73) Patentinhaber: Grass GmbH, 6973 Höchst/Vlbg. (AT)
(72) Erfinder: Egger, Remo, 6900 Bregenz (AT)
(74) Vertreter: Riebling, Peter

(56) Entgegenhaltungen:
- DE-A- 10 121 977
- DE-U- 29 907 099
- US-A- 4 872 239

## Beschreibung

Die Erfindung betrifft eine Brems- und Dämpfungsvorrichtung für bewegliche Massen, insbesondere für bewegliche Möbelteile, wie z.B. Schubladen, Möbeltüren und Klappen, nach dem Oberbegriff des Patentanspruchs 1.

Derartige, im wesentlichen auf dem Reibungsprinzip beruhende Brems- und Dämpfungsvorrichtungen sind bekannt.
Die DE 101 21 977 A1 beschreibt eine Brems- und Dämpfvorrichtung für einen Möbelbeschlag, hier insbesondere angewendet in einem Möbelscharnier. Diese Vorrichtung dämpft die Scharnierdrehbewegung und verhindert damit ein schnelles, geräuschvolles und das Möbelstück möglicherweise beschädigendes Zuschlagen einer Möbeltüre, Klappe oder ähnliches. Die Brems- und Dämpfungswirkung wird durch mindestens einen linear bewegbaren Schieber bewirkt, welcher mindestens eine Gleitfläche aufweist, die an einer zugeordneten, feststehenden Gleitfläche des Möbelbeschlages entlang gleitet, wobei zwischen den Gleitflächen ein hochviskoses, flüssiges Medium eingebracht ist, welches diese Brems-Dämpfwirkung erzeugt. Der bewegliche Teil des Möbelbeschlags, wie z. B. ein Scharnierarm, kuppelt sich nur im Bereich eines Schließwinkels in den Schieber ein, so dass die Brems-Dämpfwirkung auch nur innerhalb dieses Schließwinkels wirkt. Der Schieber muss aber bei der Öffnungsbewegung aber auch die gesamte Bremskraft durch den Öffnungswinkelbereich überwinden, bis der Scharnierarm auskuppelt und im Leerlauf in die Offenstellung gebracht werden kann.

Es ist Aufgabe der Erfindung, eine Brems- und Dämpfungsvorrichtung, insbesondere für bewegliche Möbelteile zu schaffen, welche die Bewegung des Möbelteils wirksam abbremst und dämpft, deren Brems- und Dämpfungsverhalten sich in der einen Bewegungsrichtung aber wesentlich von dem Brems- und Dämpfungsverhalten in der anderen Richtung unterscheidet.

Diese Aufgabe wird erfindungsgemäß durch die im Patentanspruch 1 angegebenen Merkmale gelöst.

Das Wesen der Erfindung besteht darin, dass die Bremselemente über ein kraft- und wegübertragendes Element miteinander gekoppelt sind, derart, dass in einer ersten Bewegungsphase die Bremselemente eine gleichläufige Bewegung ausführen, bei der die Relativgeschwindigkeit zwischen den Wirkflächen kleiner ist als die Geschwindigkeit des ersten, mit dem Möbelteil gekoppelten Bremselements, dass in einer zweiten Bewegungsphase die Bremselemente eine gegenläufige Bewegung ausführen, bei der die Relativgeschwindigkeit zwischen den Wirkflächen größer ist als die Geschwindigkeit des ersten, mit dem Möbelteil gekoppelten Bremselements, und dass in einer dritten, den ersten beiden Bewegungsphasen entgegengesetzten Bewegungsphase, bei der das zweite Bremselement im wesentlichen stillsteht, die Relativgeschwindigkeit zwischen den Wirkflächen im wesentlichen der Geschwindigkeit des ersten, mit dem Möbelteil gekoppelten Bremselements entspricht.

Die ersten beiden Bewegungsphasen werden vorzugsweise beim Abbremsen des beweglichen Möbelteils, d.h. während einer ersten Bewegungsrichtung des beweglichen Möbelteils durchlaufen. Durch die sich während der ersten beiden Bewegungsphasen unterscheidenden Geschwindigkeiten der Wirkflächen relativ zueinander wird auch einer unterschiedliche Bremskraft erreicht. Vorzugsweise ist die Bremskraft in der ersten Bewegungsphase, also am Anfang des Abbremsvorgangs, geringer als die Bremskraft in der zweiten Bewegungsphase am Ende des Abbremsvorgangs.
Die dritte Bewegungsphase entspricht der Bewegungsrichtung, die bei einem Rückstellen oder Öffnen des beweglichen Möbelteils durchlaufen wird. Hierbei ist die Bremskraft wesentlich geringer als in der zweiten Bewegungsphase, da auch die Relativgeschwindigkeit zwischen den Wirkflächen der beiden Bremselemente geringer ist.

Bevorzugte Ausgestaltungen und Weiterbildungen der Erfindung sind in den Unteransprüchen angegeben.

In einer bevorzugten Ausgestaltung der Erfindung ist das kraft- und wegübertragende Element ein Zahnritzel, dessen Drehachse axial- und längsbeweglich in Längsschlitzen des Gehäuses gelagert ist, die parallel zur Bewegungsrichtung der Bremselemente angeordnet sind. Ferner ist jedes Bremselement mit einer Zahnstange versehen, wobei beide Zahnstangen mit dem Zahnritzel zusammenwirken und eine kraft- und Wegübertragung zwischen den Bremselementen erlauben.

Gemäß der vorteilhaften Ausgestaltung der Erfindung ist die Umfangsgeschwindigkeit des Zahnritzels während der ersten Bewegungsphase geringer, vorzugsweise wesentlich geringer, als die Geschwindigkeit des mit dem Möbelteil gekoppelten Bremselements, wobei sich die Drehachse des Zahnritzels entlang der Längsschlitze in der selben Richtung wie dieses Bremselement bewegt. Somit kann erreicht werden, dass die Relativgeschwindigkeit zwischen den Wirkflächen nur etwa halb so groß ist wie die Geschwindigkeit des ersten, mit dem Möbelteil gekoppelten Bremselements.

Während der zweiten Bewegungsphase entspricht die Umfangsgeschwindigkeit des Zahnritzels im wesentlichen der Geschwindigkeit des mit dem Möbelteil gekoppelten Bremselements, wobei die Drehachse des Zahnritzels ihre Position nicht verändert. In diese Phase verdoppelt sich die Relativgeschwindigkeit zwischen den Wirkflächen im Vergleich zur Geschwindigkeit des ersten, mit dem Möbelteil gekoppelten Bremselements. Die Bremskraft steigt stark an. Dieser hohe Brems- und Dämpfungseffekt bleibt bis zur vollkommenen Einschiebestellung des beweglichen Möbelteils erhalten.

Während der dritten Bewegungsphase entspricht die Umfangsgeschwindigkeit des Zahnritzels im wesentlichen der Geschwindigkeit des mit dem Möbelteil gekoppelten Bremselements, wobei sich die Drehachse des Zahnritzels entlang der Längsschlitze in der selben Richtung wie dieses Bremselement bewegt. Somit ergibt sich eine geringe Relativgeschwindigkeit zwischen den Wirkflächen der Bremselemente und damit auch eine geringere Bremswirkung.

Erfindungsgemäß lässt sich somit vorteilhaft erreichen, dass die erste Bewegungsphase einer ersten Bremskraft, die zweite Bewegungsphase einer zweiten Bremskraft, und die dritte Bewegungsphase einer dritten Bremskraft entspricht. Durch Dimensionierung der effektiven Länge und Oberfläche der Wirkflächen, sowie durch Anpassung der Länge der Längsschlitze lassen sich diese unterschiedlichen Bremskräfte in ihrer Höhe und in ihrem gegenseitigen Verhältnis anpassen. Die Erfindung unterstützt in einfacher Weise auch eine freie Wahl beliebig langer Dämpfbereiche.

Eine Erhöhung der Bremswirkung und ein homogenes Bremsverhalten kann vorteilhaft dadurch erreicht werden, dass zwischen die Wirkflächen eine hochviskose Flüssigkeit eingebracht ist.

Die Wirkfläche des jeweiligen Bremselements wird vorzugsweise durch einen Kamm-Nutenbereich gebildet. Durch Variation der Anzahl der Kämme und Nuten können die effektiven Reibungskräfte und damit auch die Bremskräfte verändert werden.

Die Länge des Bremsbereiches wird auch durch die wirksame Länge des Kamm-Nutenbereichs des ersten Bremselements und der wirksamen Länge des Kamm-Nutenbereichs des zweiten Bremselements bestimmt, die sich voneinander unterscheiden.

Natürlich ist es vorgesehen, dass die drei Bewegungsphasen in umgekehrter Reihenfolge durchlaufen werden können, d.h. der eigentliche Brems- und Dämpfungsvorgang erstreckt sich über die dritte Bewegungsphase, während bei der Rückstellbewegung der Vorrichtung nacheinander die zweite und die erste Bewegungsphase durchlaufen werden.

Nachfolgend wird die Erfindung anhand der Zeichnungen näher erläutert. Aus den Zeichnungen und deren Beschreibung ergeben sich weitere Merkmale, Vorteile und Anwendungsmöglichkeiten der Erfindung.
Figur 1 zeigt die Brems- und Dämpfungsvorrichtung in voll ausgezogener Stellung, d. h. am Anfang ihrer Brems-Dämpfwirkung;
Figur 2 zeigt die Brems- und Dämpfungsvorrichtung in einer Stellung, bei der die Schub- und Zugstange ein Stück eingefahren ist;
Figur 3 zeigt die Brems- und Dämpfungsvorrichtung in einer Stellung, bei der die Schub- und Zugstange noch weiter eingefahren ist;
Figur 4 zeigt die Brems- und Dämpfungsvorrichtung in einer Stellung, bei der die Schub- und Zugstange fast ganz eingefahren ist;
Figur 5 zeigt die Brems- und Dämpfungsvorrichtung mit ihrer Schub- und Zugstange am Arbeitswegende;
Figur 6 zeigt die Brems- und Dämpfungsvorrichtung in einer Stellung, bei der die Schub- und Zugstange ein Stück ausgezogen ist;
Figur 7 zeigt die Brems- und Dämpfungsvorrichtung in einer Stellung, bei der die Schub- und Zugstange fast maximal ausgezogen ist;
Figur 8 zeigt die Brems- und Dämpfungsvorrichtung in einer Stellung, bei der die Schub- und Zugstange maximal ausgezogen ist;
Figur 9 zeigt die Einzelteile der Brems- und Dämpfungsvorrichtung in einer Explosionsdarstellung.

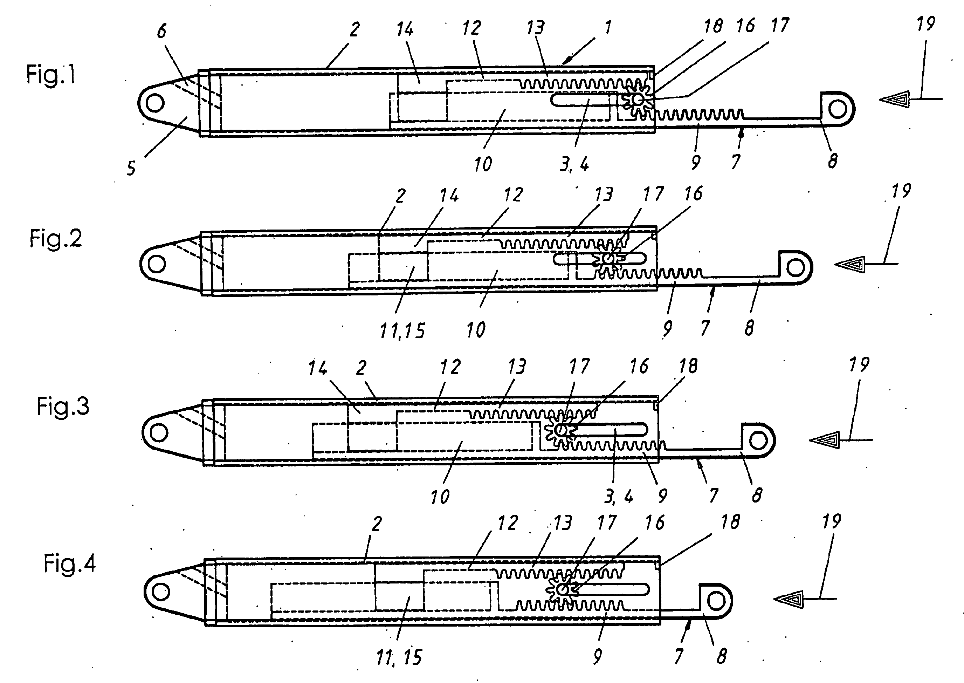

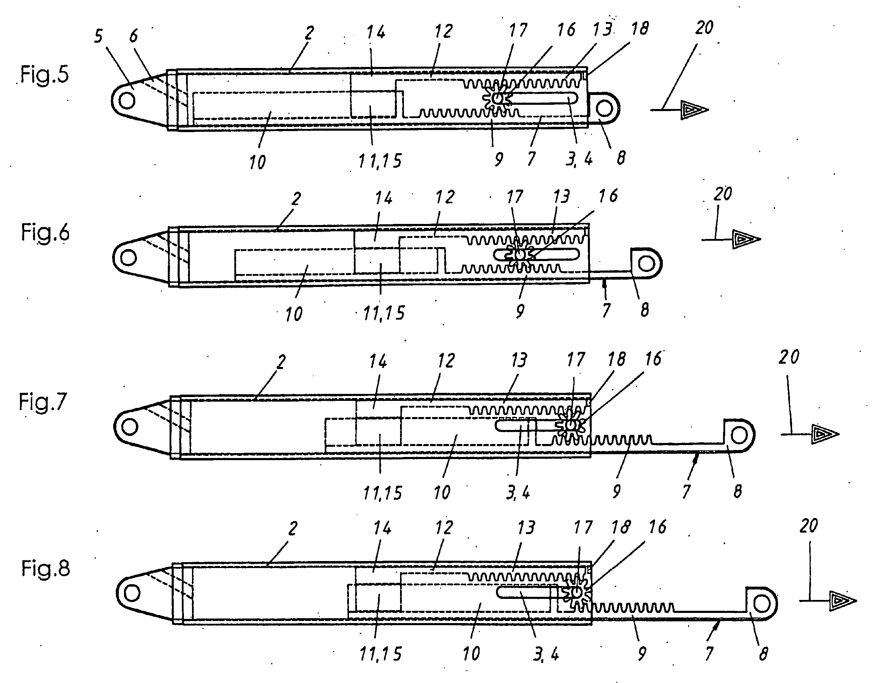

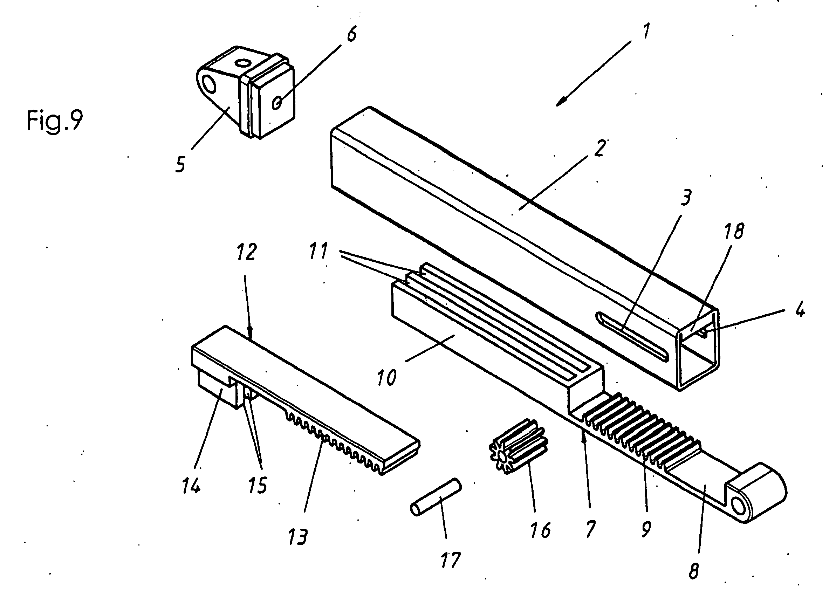

Figur 1 zeigt die Brems- und Dämpfungsvorrichtung 1 in voll ausgezogener Stellung, d. h. am Anfang ihrer Brems-Dämpfwirkung, z.B. beim Schließen einer Schublade. Wie in Verbindung mit Figur 9 ersichtlich ist, sind in einem Gehäuse 2, das vorzugsweise als Rohr mit einem quadratischen oder rechtwinkligen Querschnitt ausgebildet ist, zwei Schieber, ein unterer Schieber 7 und ein oberer Schieber 12, angeordnet. Die Schieber 7, 12 sind im Gehäuse 2 längsgeführt und können sich darin in den Pfeilrichtungen 19 bzw. 20 (Fig. 5) vor- und zurückbewegen. Ein Ende des Gehäuses 2 ist mit einem Deckel 5 versehen, welcher vorzugsweise auch zur Befestigung der Vorrichtung ausgebildet sein kann. In diesem Deckel 5 befindet sich vorzugsweise eine Entlüftungsbohrung 6. Das gegenüberliegende Ende des Gehäuses 2 ist offen, lediglich ein Anschlag 18 ist an diesem Ende vorgesehen (siehe auch Figur 9).

Der untere Schieber 7 umfasst eine Schub- und Zugstange 8 mit einem Kupplungskopf, die aus dem offenen Ende des Gehäuses 2 ragt. Der Kupplungskopf wird mit dem abzubremsenden beweglichen Möbelteil (nicht dargestellt) verbunden. Der Schub- und Zugstange 8 schließen sich ein Zahnstangenteil 9 und einen Kamm-Nutenbereich 10 an. Der Kamm-Nutenbereich 10 bildet die eigentliche Wirkfläche 11 zur Erzeugung einer Bremskraft aus. Die horizontalen Flächen der Schiebers 7, 12, sowie die senkrechten Seitenflächen sind mit Schiebesitz im Gehäuse 2 längsverschiebbar.

Der obere Schieber 12 ist ohne Schub- und Zugstange und daher kürzer ausgeführt und besitzt ein etwa gleich langes Zahnstangenteil 13 wie der untere Schieber, aber einen kürzeren Kamm-Nutenbereich 14. Auch dieser Kamm-Nutzenbereich 14 bildet eine Wirkfläche 15 zur Erzeugung einer Bremskraft. Der Schieber 12 ist ebenfalls mit Schiebesitz im Gehäuse 2 längsverschiebbar gelagert. Beide Schieber 7, 12 sind einander zugewandt geführt, so dass die Kamm-Nutenbereiche 10, 14 ebenfalls mit Schiebesitz ineinander greifen können. Auch beide Zahnstangenbereiche 9, 13 sind gegeneinander gerichtet, so dass ein sich dazwischen befindliches Zahnritzel 16 einen drehmomentübertragenden Zahntrieb ausbildet. Das Zahnritzel 16 hat eine durchgehende Achse 17, welche auf beiden Seiten in Längsschlitzen 3, 4 des Gehäuses 2 axial- und längsbeweglich gelagert ist.

In die ineinander greifenden Kämme und Nuten der beiden Schieber 7, 12 bzw. zwischen den Wirkflächen 11, 15 ist vorzugsweise eine hochviskose Flüssigkeit eingebracht.

In Figur 1 befindet sich der untere Schieber 7 in seiner voll ausgezogenen Stellung, und der obere Schieber ist ein kleines Stück vom Anschlag 18 entfernt. Durch das abzubremsende Möbelteil wird die Schub- und Zugstange nun ein Pfeilrichtung 19 bewegt.

In der Figur 2 ist die Schub- und Zugstange 8 des Schiebers 7 bereits ein Stück weit in das Gehäuse 2 eingefahren. Während dieser Bewegung bewegt sich das Zahnritzel 16 im Uhrzeigersinn und dessen Achse 17 wird gleichzeitig entlang der Längsschlitze 3, 4 in Richtung 19 mitgenommen. Die Umfangsgeschwindigkeit des Ritzels 16 ist daher kleiner als die Geschwindigkeit des unteren Schiebers 7. In der gezeigten Stellung befinden sich das Ritzel 16 und der obere Schieber 12 etwa auf ihrem halbem Verschiebeweg. Durch die geringere Umfangsgeschwindigkeit des Ritzels 16 hat der obere Schieber 12 aber nur etwa ¼ des Verschiebeweges des unteren Schiebers 7 zurückgelegt und zwar in der selben Richtung (Pfeilrichtung 19). Die Relativgeschwindigkeit zwischen den Wirkflächen 11, 15 der Kamm- und Nutenbereiche 10, 14 ist daher auch nur etwa halb so groß wie die Einschubgeschwindigkeit der Schub- und Zugstange 8, d. h. die Geschwindigkeit des abzubremsenden Möbelteils. Die Dämpfwirkung ist daher in dieser ersten Bewegungsphase relativ gering.

In der Figur 3 steht die Achse 17 des Ritzels 16 am Ende der Längsschlitze 3, 4 an, während die Schub- und Zugstange 8 mit dem unteren Schieber 7 und der Zahnstange 9 die Einschubbewegung fortsetzt. Das Ritzel 16 dreht sich daher im Uhrzeigersinn mit derselben Geschwindigkeit wie die Geschwindigkeit des unteren Schiebers und zwar an Ort und Stelle am hinteren Ende der Längsschlitze 3, 4. Der obere Schieber 12 wird daher mit derselben Längsgeschwindigkeit wie der untere Schieber 7 in Richtung des Anschlags 18, d.h. entgegen der Pfeilrichtung 19, bewegt. Die Schieber 7, 12 bewegen sich daher zueinander in entgegengesetzter Richtung, so dass sich die Relativgeschwindigkeit zwischen den Kamm- und Nutenbereichen 10, 14 in Bezug auf die jeweiligen Geschwindigkeit der Schieber 7, 12 verdoppelt. Dadurch steigt auch die Brems- und Dämpfungswirkung in dieser zweiten Bewegungsphase stark an. Dieser hohe Brems- und Dämpfungseffekt bleibt bis zur vollkommenen Einschiebestellung des unteren Schiebers 7 erhalten.
In der in Figur 4 gezeigten Stellung des Schiebersystems bewegen sich die Wirkflächen 11, 15 der Kamm- und Nutenbereiche 10, 14 immer noch mit doppelter Relativgeschwindigkeit zueinander.

Figur 5 zeigt den unteren Schieber 7 an seinem Arbeitswegende. Der obere Schieber 12 hat seinen Arbeitsweg ebenfalls zurückgelegt und steht ein kleines Stück vor seinem Anschlag 18.

Figur 6 zeigt den Beginn der dritten Bewegungsphase der Brems- und Dämpfungsvorrichtung 1. In dieser Bewegungsphase werden die beiden Schieber 7, 12 wieder in ihre Anfangsstellung gebracht. Die Schub- und Zugstange 8 des unteren Schiebers 7 ist bereits in Pfeilrichtung 20 ein Stück aus dem Gehäuse 2 herausgezogen. Das Ritzel 16 dreht sich gegen den Uhrzeigersinn und hat sich bereits auf der Zahnstange 13 des oberen Schiebers 12 abgerollt und den Schieber ganz an den Anschlag 18 gedrückt. Der obere Schieber 12 bleibt somit für den Rest der dritten Bewegungsphase stehen. Der untere Schieber 7 und das Ritzel 16 behalten ihre Auszugbewegung bei, wobei sich das Ritzel zwangsweise in Pfeilrichtung 20 entlang der Längsschlitze 3, 4 bewegt. Die Kamm- und Nutenbereiche 10, 14 bzw. die Wirkflächen 11, 15 bewegen sich zueinander mit einer Geschwindigkeit, die der Auszugsgeschwindigkeit des unteren Schiebers 7 entspricht. Die dadurch erzielte Bremswirkung ist nicht so groß und liegt zwischen den Bremskräften der ersten beiden Bewegungsphasen. Die Bremskraft ist während der gesamten dritten Bewegungsphase im wesentlichen gleichbleibend. Diese Bewegung wird über die Stellung gemäß Figur 7 hinaus beibehalten.

Am Ende der dritten Bewegungsphase, d.h. am Ende der Auszugbewegung, wie es in Figur 8 dargestellt ist, schlägt die Achse 17 des Ritzels 16 am Anfang der Längsschlitze 3, 4 an und drückt den oberen Schieber 12 etwas vom Anschlag 18 weg. Die Schub- und Zugstange 8, d.h. der untere Schieber 7, ist am Auszugsende angelangt. Diese Stellungen der Schieber 7, 12 entsprechen den in Figur 1 dargestellten Anfangsstellungen.

### Liste der Bezugszeichen

- 1: Brems- und Dämpfungsvorrichtung
- 2: Gehäuse
- 3: Längsschlitz
- 4: Längsschlitz
- 5: Deckel
- 6: Entlüftungsbohrung
- 7: Schieber (erster)
- 8: Schub-Zugstange
- 9: Zahnstange
- 10: Kamm-Nuten-Bereich
- 11: Wirkfläche
- 12: Schieber (zweiter)
- 13: Zahnstange
- 14: Kamm-Nuten-Bereich
- 15: Wirkfläche
- 16: Zahnritzel
- 17: Achse
- 18: Anschlag
- 19: Pfeilrichtung
- 20: Pfeilrichtung

## Patentansprüche

1. Vorrichtung zum Bremsen und zur Dämpfung von beweglichen Möbelteilen, mit einem Gehäuse (2), einem ersten, teilweise in dem Gehäuse angeordneten und darin verschiebbaren Bremselement (7), das mit dem beweglichen Möbelteil gekoppelt ist, und einem zweiten in dem Gehäuse angeordneten und darin verschiebbaren Bremselement (12), wobei die Bremselemente einander zugewandte Wirkflächen (11, 15) ausbilden, die bei einer Verschiebung der Bremselemente relativ zueinander eine Bremskraft erzeugen,
**dadurch gekennzeichnet,**
**dass** die Bremselemente (7, 12) über ein kraft- und wegübertragendes Element (16) miteinander gekoppelt sind, derart,
**dass** in einer ersten Bewegungsphase die Bremselemente (7, 12) eine gleichläufige Bewegung ausführen, bei der die Relativgeschwindigkeit zwischen den Wirkflächen (11, 15) kleiner ist als die Geschwindigkeit des ersten, mit dem Möbelteil gekoppelten Bremselements (7),
**dass** in einer zweiten Bewegungsphase die Bremselemente (7, 12) eine gegenläufige Bewegung ausführen, bei der die Relativgeschwindigkeit zwischen den Wirkflächen (11, 15) größer ist als die Geschwindigkeit des ersten, mit dem Möbelteil gekoppelten Bremselements (7), und
**dass** in einer dritten, den ersten beiden Bewegungsphasen entgegengesetzten Bewegungsphase das zweite Bremselement (12) im wesentlichen stillsteht, wobei die Relativgeschwindigkeit zwischen den Wirkflächen (11, 15) im wesentlichen der Geschwindigkeit des ersten, mit dem Möbelteil gekoppelten Bremselements (7) entspricht.

2. Vorrichtung zum Bremsen und zur Dämpfung von beweglichen Möbelteilen nach Anspruch 1, **dadurch gekennzeichnet, dass** das kraft- und wegübertragende Element ein Zahnritzel (16) ist, dessen Drehachse (17) axial- und längsbeweglich in Längsschlitzen (3, 4) des Gehäuses (2) gelagert ist, die parallel zur Bewegungsrichtung der Bremselemente (7, 12) angeordnet sind.

3. Vorrichtung zum Bremsen und zur Dämpfung von beweglichen Möbelteilen nach dem Anspruch 2 **dadurch gekennzeichnet, dass** jedes Bremselement (7, 12) mit einer Zahnstange (8, 13) versehen ist, und beide Zahnstangen mit dem Zahnritzel (16) zusammenwirken.

4. Vorrichtung zum Bremsen und zur Dämpfung von beweglichen Möbelteilen nach einem der Ansprüche 1 bis 3, **dadurch gekennzeichnet, dass** die Umfangsgeschwindigkeit des Zahnritzels (16) während der ersten Bewegungsphase geringer ist als die Geschwindigkeit des mit dem Möbelteil gekoppelten Bremselements (7), : wobei sich die Drehachse (17) des Zahnritzels entlang der Längsschlitze (3, 4) in der selben Richtung (19) wie dieses Bremselement (7) bewegt.

5. Vorrichtung zum Bremsen und zur Dämpfung von beweglichen Möbelteilen nach einem der Ansprüche 1 bis 4, **dadurch gekennzeichnet, dass** die Umfangsgeschwindigkeit des Zahnritzels (16) während der zweiten Bewegungsphase im wesentlichen der Geschwindigkeit des mit dem Möbelteil gekoppelten Bremselements entspricht (7), wobei die Drehachse (17) des Zahnritzels ihre Position nicht verändert.

6. Vorrichtung zum Bremsen und zur Dämpfung von beweglichen Möbelteilen nach einem der Ansprüche 1 bis 5, **dadurch gekennzeichnet, dass** die Umfangsgeschwindigkeit des Zahnritzels (16) während der dritten Bewegungsphase im wesentlichen der Geschwindigkeit des mit dem Möbelteil gekoppelten Bremselements entspricht (7), wobei sich die Drehachse (17) des Zahnritzels entlang der Längsschlitze (3, 4) in der selben Richtung (20) wie dieses Bremselement (7) bewegt.

7. Vorrichtung zum Bremsen und zur Dämpfung von beweglichen Möbelteilen nach einem der Ansprüche 1 bis 6, **dadurch gekennzeichnet, dass** zwischen die Wirkflächen (11, 15) eine hochviskose Flüssigkeit eingebracht ist.

8. Vorrichtung zum Bremsen und zur Dämpfung von beweglichen Möbelteilen nach einem der Ansprüche 1 bis 7, **dadurch gekennzeichnet, dass** jedes der Bremselemente (7, 12) einen Kamm-Nutenbereich (10, 14) aufweist, der eine die Bremswirkung erzeugende Wirkfläche (11, 15) ausbildet.

9. Vorrichtung zum Bremsen und zur Dämpfung von beweglichen Möbelteilen nach einem der Ansprüche 1 bis 8, **dadurch gekennzeichnet, dass** sich die wirksame Länge des Kamm-Nutenbereichs (10) des ersten Bremselements (7) von der wirksamen Länge des Kamm-Nutenbereichs (14) des zweiten Bremselements (12) unterscheidet.

10. Vorrichtung zum Bremsen und zur Dämpfung von beweglichen Möbelteilen nach einem der Ansprüche 1 bis 9, **dadurch gekennzeichnet, dass** die erste Bewegungsphase einer ersten Bremskraft, die zweite Bewegungsphase einer zweiten Bremskraft, und die dritte Bewegungsphase einer dritten Bremskraft entspricht.

11. Vorrichtung zum Bremsen und zur Dämpfung von beweglichen Möbelteilen nach einem der Ansprüche 1 bis 10, **dadurch gekennzeichnet, dass** die drei Bewegungsphasen in umgekehrter Reihenfolge durchlaufen werden.

## Claims

1. Device for braking and damping movable furniture parts, comprising a housing (2), a first braking element (7) arranged partially in the housing and displaceable therein, which is coupled to the movable furniture part, and a second braking element (12) arranged in the housing and displaceable therein, wherein the braking elements form operative faces (11, 15) facing one another, which generate a braking force relative to one another during a displacement of the braking elements, **characterised in that** the braking elements (7, 12) are coupled to one another via a force-transmitting and path-transmitting element (16), in such a way that in a first movement phase, the braking elements (7, 12) carry out a synchronous movement, in which the relative speed between the operative faces (11, 15) is less than the speed of the first braking element (7) coupled to the furniture part, and **in that** in a second movement phase, the braking elements (7, 12) carry out a movement in the opposite direction, in which the relative speed between the operative faces (11, 15) is greater than the speed of the first braking element (7) coupled to the furniture part, and **in that** a third movement phase counter to the first two movement phases, the second braking element (12) substantially stands still, the relative speed between the operative faces (11, 15) substantially corresponding to the speed of the first braking element (7) coupled to the furniture part.

2. Device for braking and damping movable furniture parts according to claim 1, **characterised in that** the force-transmitting and path-transmitting element is a pinion (16), the rotational axis (17) of which is mounted so as to be axially and longitudinally movable in elongated slots (3, 4) of the housing (2), which are arranged parallel to the movement direction of the braking elements (7, 12).

3. Device for braking and damping movable furniture parts according to either of claims 1 or 2, **characterised in that** each braking element (7, 12) is provided with a toothed rack (8, 13), and the two toothed racks cooperate with the pinion (16).

4. Device for braking and damping movable furniture parts according to any one of claims 1 to 3, **characterised in that** the peripheral speed of the pinion (16) during the first movement phase is less than the speed of the braking element (7) coupled to the furniture part, the rotational axle (17) of the pinion being moved along the elongated slots (3, 4) in the same direction (19) as this braking element (7).

5. Device for braking and damping movable furniture parts according to any one of claims 1 to 4, **characterised in that** the peripheral speed of the pinion (16) during the second movement phase substantially corresponds to the speed of the braking element (7) coupled to the furniture part, the rotational axle (17) of the pinion being not changing its position.

6. Device for braking and damping movable furniture parts according to any one of claims 1 to 5, **characterised in that** the peripheral speed of the pinion (16) during the third movement phase substantially corresponds to the speed of the braking element (7) coupled to the furniture part, the rotational axle (17) of the pinion being moved along the elongated slots (3, 4) in the same direction (20) as this braking element (7).

7. Device for braking and damping movable furniture parts according to any one of claims 1 to 6, **characterised in that** a highly viscous liquid is introduced between the operative faces (11, 15).

8. Device for braking and damping movable furniture parts according to any one of claims 1 to 7, **characterised in that** each of the braking elements (7, 12) has a comb/groove region (10, 14), which forms an operative face (11, 15) generating the braking effect.

9. Device for braking and damping movable furniture parts according to any one of claims 1 to 8, **characterised in that** the effective length of the comb/groove region (10) of the first braking element (7) differs from the effective length of the comb/groove region (14) of the second braking element (12).

10. Device for braking and damping movable furniture parts according to any one of claims 1 to 9, **characterised in that** the first movement phase corresponds to a first braking force, the second movement phase to a second braking force and the third movement phase to a third braking force.

11. Device for braking and damping movable furniture parts, according to any one of claims 1 to 10, **characterised in that** the three movement phases are passed through in the reverse order.

## Revendications

1. Dispositif pour freiner et amortir des parties de meuble mobiles, comprenant un boîtier (2), un premier élément de freinage (7) qui est partiellement disposé dans le boîtier, qui est apte à coulisser dans celui-ci et qui est accouplé à la partie de meuble mobile, et un second élément de freinage (12) qui est disposé dans le boîtier et qui est apte à coulisser dans celui-ci, les éléments de freinage formant des surfaces actives (11, 15) tournées l'une vers l'autre qui, lors d'un coulissement des éléments de freinage l'un par rapport à l'autre, produisent une force de freinage,
**caractérisé en ce que** les éléments de freinage (7, 12) sont accouplés par l'intermédiaire d'un élément de transmission de force et de trajectoire (16)
de sorte que pendant une première phase de mouvement, les éléments de freinage (7, 12) décrivent un mouvement dans le même sens lors duquel la vitesse relative entre les surfaces actives (11, 15) est inférieure à la vitesse du premier élément de freinage (7) accouplé à la partie de meuble,
que pendant une deuxième phase de mouvement, les éléments de freinage (7, 12) décrivent un mouvement en sens inverse lors duquel la vitesse relative entre les surfaces actives (11, 15) est supérieure à la vitesse du premier élément de freinage (7) accouplé à la partie de meuble,
et que pendant une troisième phase de mouvement, opposée aux deux premières, le second élément de freinage (12) est quasiment arrêté, la vitesse relative entre les surfaces actives (11, 15) correspondant quasiment à la vitesse du premier élément de freinage (7) accouplé à la partie de meuble.

2. Dispositif pour freiner et amortir des parties de meuble mobiles selon la revendication 1, **caractérisé en ce que** l'élément de transmission de force et de trajectoire est constitué par un pignon (16) dont l'axe de rotation (17) est monté mobile axialement et longitudinalement dans des fentes oblongues (3, 4) du boîtier (2) qui sont parallèles au sens de mouvement des éléments de freinage (7, 12).

3. Dispositif pour freiner et amortir des parties de meuble mobiles selon la revendication 1 ou 2, **caractérisé en ce que** chaque élément de freinage (7, 12) est pourvu d'une crémaillère (8, 13) et les deux crémaillères coopèrent avec le pignon (16).

4. Dispositif pour freiner et amortir des parties de meuble mobiles selon l'une des revendications 1 à 3, **caractérisé en ce que** la vitesse circonférentielle du pignon (16) pendant la première phase de mouvement est inférieure à la vitesse de l'élément de freinage (7) accouplé à la partie de meuble, l'axe de rotation (17) du pignon se déplaçant le long des fentes oblongues (3, 4) dans le même sens (19) que cet élément de freinage (7).

5. Dispositif pour freiner et amortir des parties de meuble mobiles selon l'une des revendications 1 à 4, **caractérisé en ce que** la vitesse circonférentielle du pignon (16) pendant la deuxième phase de mouvement correspond quasiment à la vitesse de l'élément de freinage (7) accouplé à la partie de meuble, l'axe de rotation (17) du pignon ne changeant pas de position.

6. Dispositif pour freiner et amortir des parties de meuble mobiles selon l'une des revendications 1 à 5, **caractérisé en ce que** la vitesse circonférentielle du pignon (16) pendant la troisième phase de mouvement correspond quasiment à la vitesse de l'élément de freinage (7) accouplé à la partie de meuble, l'axe de rotation (17) du pignon se déplaçant le long des fentes oblongues (3, 4) dans le même sens (20) que cet élément de freinage (7).

7. Dispositif pour freiner et amortir des parties de meuble mobiles selon l'une des revendications 1 à 6, **caractérisé en ce qu'**un liquide très visqueux est prévu entre les surfaces actives (11, 15).

8. Dispositif pour freiner et amortir des parties de meuble mobiles selon l'une des revendications 1 à 7, **caractérisé en ce que** chacun des éléments de freinage (7, 12) présente une zone à cannelures (10, 14) qui forme une surface active (11, 15) produisant l'action de freinage.

9. Dispositif pour freiner et amortir des parties de meuble mobiles selon l'une des revendications 1 à 8, **caractérisé en ce que** la longueur active de la zone à cannelures (10) du premier élément de freinage (7) est différente de la longueur active de la zone à cannelures (14) du second élément de freinage (12).

10. Dispositif pour freiner et amortir des parties de meuble mobiles selon l'une des revendications 1 à 9, **caractérisé en ce que** la première phase de mouvement correspond à une première force de freinage, la deuxième phase de mouvement à une deuxième force de freinage et la troisième phase de mouvement à une troisième force de freinage.

11. Dispositif pour freiner et amortir des parties de meuble mobiles selon l'une des revendications 1 à 10, **caractérisé en ce que** les trois phases de mouvement se déroulent dans l'ordre inverse.
